# EUROPEAN PATENT SPECIFICATION

(11) **EP 3 038 729 B1**
(45) Date of publication and mention of the grant of the patent: **22.11.2017**
(21) Application number: 14776596.0
(22) Date of filing: 29.08.2014
(51) Int. Cl.: B01D 39/08

(54) **FILTER ELEMENT**
FILTERELEMENT
ÉLÉMENT FILTRANT

(30) Priority: 29.08.2013 GB 201315363
(43) Date of publication of application: 06.07.2016
(73) Proprietor: Clear Edge Germany GmbH, 47608 Geldern-Walbeck (DE)
(72) Inventor: BARON, Dominic, Bolton Lancashire BL6 7QZ (GB)
(74) Representative: Wilson Gunn
(86) International application number: PCT/EP2014/068413
(87) International publication number: WO 2015/028628

(56) References cited:
- EP-A2- 0 048 962
- US-A- 5 795 835

## Description

The present invention relates to a filter element (such as a filter belt), a horizontal chamber filtration apparatus (such as a tower press) comprising a filter element, and use of a filter element in a horizontal chamber filtration apparatus (such as a tower press).

Filter elements typically comprise woven fabric, that is a fabric comprising warp and weft yarns, wherein the weft is threaded through the warp. Warp yarns are typically longitudinal (i.e. run in the machine direction) and weft yarns are typically transverse (i.e. run perpendicular to the machine direction; the cross-machine direction). Since woven structures possess an inherent degree of stretch, such filter elements are susceptible to elongation when used on large filtration machines where the elements are placed under tension. This is particularly true in vertical tower presses, since a filter element in the form of a filter belt zig-zags down the machine and may be up to around 200m long. This can mean significant elongation and a 'stretch' of several metres in total. As the filter element elongates it is exposed to greater loads, and so elongation is an ever increasing problem. This can lead to premature failure of the belt, possible damage to the filtration apparatus, and/or poor tracking of the belt leading to edge damage. Consequently it is desirable to reduce the susceptibility of filter elements to elongation, and/or to increase their modulus. In addition, filter elements are susceptible to abrasion, for example due to the presence of abrasive particles in the filtrate and/or from the filtration apparatus itself. Such abrasion reduces the working life of the filter element. It is therefore desirable to additionally improve the abrasion resistance of filter elements in order to prolong their working life.

US 5 795 835 A discloses a weft inserted warp knit textile with laid-in warp yarns and laid-in weft yarns at every course. A non-woven filtration textile is laid-in under the weft yarns. Knitting yarns hold the textile, warp yarns and weft yarns together.

According to a first embodiment of the present invention, there is provided a filter element comprising interlaced weft, and warp yarns and laid-in yarns, wherein:
the filter element comprises two layers of weft yarns, interlaced with warp yarns to create a fabric, with the laid-in yarns located between said layers of weft yarns;
the laid-in yarns do not interlace with the weft yarns and run substantially parallel to the warp yams;
the weft yarns run substantially perpendicular to the warp yarns, and wherein;
the ratio of the laid-in yarns to warp yarns is at least 1:4 and the weft yarns comprise an abrasion resistant material e.g. NYLON.

According to a second embodiment of the present invention, there is provided a horizontal chamber filtration apparatus, such as a tower press, comprising a filter element according to the first embodiment.

According to a third embodiment of the present invention, there is provided the use of a filter element according to the first embodiment in a horizontal chamber filtration apparatus such as a tower press.

The laid-in yarns of the present invention give rise to filter elements having an increased modulus, i.e. a reduced tendency to elongation. Without wishing to be bound by theory, it is believed that the laid-in yarns reduce elongation as they do not interlace with any weft yarns, so that any elongation effects due to fabric crimp are reduced. Using laid in yarns in the warp direction, low load elongation values of 0.5% or less @400N/5cm are achievable according to DIN EN ISO (13934) without adversely affecting filtration performance. Further, the weft yarns comprising an abrasion resistant material, such as NYLON, give rise to filter elements having improved abrasion resistance. Orienting the filter element such that the laid-in yarns run vertically, parallel with the surface of a filter plate when in use, maximises the resistance to elongation.

Filter elements typically have top and bottom surfaces, wherein one or both of these surfaces can be used for filtration. When the filter element has weft yarns comprising polyamide, e.g. NYLON, as the predominant yarns on both the top and bottom surfaces of the filter element, it has particularly improved abrasion resistance, and when the filter element has a sateen weave, e.g. a weave of double faced construction comprising polyamide yarns on both surfaces, abrasion resistance is particularly improved.

The filter element ideally comprises at least two layers of weft and in one embodiment comprises only two layers of weft. The weft yarns comprising polyamide can comprise at least 80% wt at polyamide, e.g. NYLON, preferably 100% wt. The laid-in yarns do not interlace with any weft yarns.

The ratio of laid-in yarns to warp yarns is at least 1:4, and in various embodiments preferably at least 1:3, more preferably at least 1:2, most preferably at least 1:1, but it can also be 2:3. The laid-in yarns might in one embodiment comprise any one of polypropylene (PP), polyester (PET), polyethylene (PE), polybutylene terephthalate (PBT), polyphenylene sulfide (PPS) and/or aramid such as KEVLAR materials. In one embodiment their linear density is from 150 to 4400 dtex (grams/10,000m), and in another embodiment from 1100 to 2200 dtex. The laid-in yarns can be multifilament staple or monofilament.

The warp yarns might in one embodiment comprise any of PP, PET, PE, PBT, PPS or Kevlar material. In one embodiment their linear density is from 150 to 4400 dtex. In another embodiment this is from preferably 1100 to 2200 dtex. The warp yarns can be multifilament staple or monofilament, and/or the warp yarns can be woven in any of plain weave, all twill combinations, or all satin combinations.

The weft yarns typically comprise abrasion resistant material such as NYLON (PA), and may also typically comprise PP, PET, PE, PBT, PPS or aramid (e.g. KEVLAR) material. In one embodiment the weft yarns consist essentially of, or consist of, NYLON (PA). In one embodiment their linear density is from 150 to 4400 dtex. In another embodiment this is from 1100 to 2200 dtex. The weft yarns can be multifilament staple or monofilament.

An abrasion resistant coating, for example of glue or resin, may optionally be applied to the filter element to increase lifetime. This coating may be (but is not limited to), for example, a two part epoxy or similar. Typically, the coating is an aqueous Phenol Formaldehyde resole system. The coating can also be impregnated into the fabric of the filter element.

The coating can be typically applied using a coating machine comprising a simple Knife over Air system, with a 'J' blade, which causes the resin to be forced into the filter element, thus giving an impregnation, rather than a discrete coating on top of the filter element. The coating should not, however, markedly alter the permeability of the filter element.

Usually the filter element is first coated and dried, and then cured preferably by passing down a stenter. Afterwards, hot calandering, at for example 145°C, is preferred.

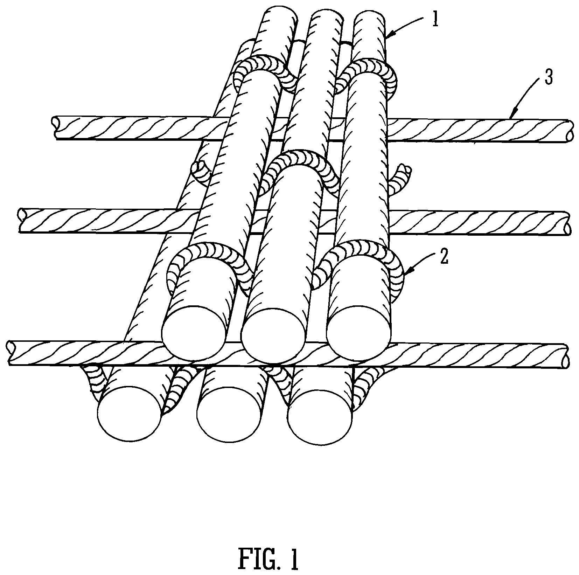

The present invention will now be illustrated, by way of example only, by reference to Figure 1 which shows a schematic diagram of a filter element according to the invention.

In Figure 1, two layers of weft yarns 1 and warp yarns 2 are interlaced to create a fabric, wherein the weft yarns run perpendicular to the machine direction and the warp yarns run parallel to it. Laid-in yarns 3 placed in-between the two weft layers also run parallel to the machine direction. There is a laid-in yarn present between each pair of warp yarns, such that the ratio of laid-in yarns to warp yarns is 1:1. The weft yarns 1 comprise an abrasion resistant material such as NYLON.

A filter element according to the invention, labelled V6 in the below tables, has been tested for abrasion resistance and extension resistance against standard Clear Edge and competitor (Tamfelt) materials.

The abrasion resistance was tested using a NuMartindale Abrasion Tester with single line test mode with a pressure of 12kPa with 50 cycles per minute. The sandpaper used was Klingspor PSIIC (240 grain), and circular test samples of 140mm in diameter were used. Samples were loaded in such a way that the cake side was in contact with the sandpaper. The results achieved were as follows in Table 1:

**Table 1**

| **Clear Edge product ref** | **After 100 cycles** | **After 500 cycles** | **After 2000 cycles** | **After 5000 cycles** | **After 8000 cycles** | **After 11000 cycles** | **After 13000 cycles** | **After 17000 cycles** | **After 19000 cycles** | **After 24000 cycles** | **After 30000 cycles** | **After 35000 cycles** |
|---|---|---|---|---|---|---|---|---|---|---|---|---|
| 98430F | Fine dust | Hairy surface | Hairy surface | Hairy surface and warp flattens up. Fine dust | Hairy surface and fine dust | Fine dust and hairy surface | Fabric failed | - | - | - | - | - |
| 25330B | Fine | Hairy | Hairy | Hairy | Wefts | Pin | Fabric | - | - | - | - | - |
| | dust and hairy surface | surface | surface | surface | exposed. Failure appear | holes in one row. Fabric fails | failed | | | | | |
| 98320K | Fine dust and hairy surface | Hairy surface | Hairy surface | Hairy surface | Hairy surface | Hairy surface | Hairy surface | Fabric failed. Warp completely abrades off | - | - | - | - |
| 97770F | Fine dust and hairy surface | Hairy surface | Hairy surface | Hairy surface | Hairy surface and warp flattens up. Fine dust | Fine dust and hairy surface | Hairy surface | Fabric failed | - | - | - | - |
| V6 (fabric of the invention) | Fine dust and hairy surface | Fine dust and hairy surface | Fine dust and hairy surface | Fine dust and hairy surface | Fine dust and hairy surface | Fine dust and hairy surface | Fine dust and hairy surface | Fine dust and hairy surface | Hairy surface and weft appears on the surface | Fine dust and hairy surface | Fine dust and hairy surface | Fabric failed |

As can be seen, the V6 (which is the product according to the invention) shows the highest abrasion resistance as compared to the other standard Clear Edge Fabrics.

The extension resistance of the V6 product was tested as compared to competitor's products (by Tamfelt) and as compared to other Clear Edge products. Testing was done by measuring (i) how much load must be attached per tensile metre in the warp direction to achieve 2% elongation, and (ii) the % elongation in the warp direction at a load of 400N. As can be seen from table 2, the V6 (product according to the invention) has most favourable load characteristics.

**Table 2**

| **Reference** | **(i) Low Load N/5cm @ 2%** | **(ii) Low Load % @ 400N** |
|---|---|---|
| Tamfelt S 2206-L1 K4 | 600 | 1.6 |
| Tamfelt S 2106-L1 | 1000 | 1.1 |
| Tamfelt S 2102-L1 K4 | 1000 | 1.1 |
| Tamfelt S 2104-L1 | 1000 | 1.1 |
| Tamfelt S 2123-L1 | 1200 | 1.0 |
| Tamfelt S 2110- L1 | 850 | 1.3 |
| Tamfelt S 2209-L1 | 900 | 1.0 |
| Clear Edge 98320F | 1600 | 0.7 |
| Clear Edge 97630F | 1400 | 0.7 |
| Clear Edge 97770F | 900 | 1.2 |
| Clear Edge 18830F | 1200 | 0.9 |
| Clear Edge 98320F | 1600 | 0.7 |
| Clear Edge V6 | 1900 | 0.45 |

It is to be understood that the above described embodiment is by way of illustration only. Many modifications and variations are possible. For example three or more layers of weft may be provided in the filter.

## Claims

1. A filter element comprising interlaced weft yarns (1) and warp yarns (2) and laid-in yarns (3), wherein:
the filter element comprises two layers of weft yarns (1) and warp yarns (2) interlaced to create a fabric, with the laid-in yarns (3) located between said layers of weft yarns (1);
the laid-in yarns (3) do not interlace with the weft yarns (1) and run substantially parallel to the warp yarns (2);
the weft yarns (1) run substantially perpendicular to the warp yarns (2), and wherein;
the ratio of the laid-in yarns (3) to warp yarns (2) is at least 1:4 and the weft yarns (1) comprise an abrasion resistant material.

2. A filter element according to claim 1, wherein the abrasion resistant material comprises polyamide.

3. A filter element according to claim 1 or claim 2, wherein the weft yarns (1) are the predominant yarn on both the top and bottom surfaces of the filter element.

4. A filter element according to any preceding claim, wherein the weft yarns (1) are woven in a double-faced sateen construction.

5. A filter element according to any preceding claim, wherein the ratio of laid-in yarns (3) to warp yarns (2) is approximately 1:1.

6. A filter element according to any preceding claim, wherein the laid-in, warp and/or weft yarns comprise any of the following either alone or in combination:- PP, PET, PE, PBT, PPS and/or aramid materials.

7. A filter element according to any preceding claim, wherein the weft yarns (1) consists essentially of polyamide.

8. A filter element according to any preceding claim, wherein the filter element is a filter belt.

9. A filter element according to any preceding claim, wherein the filter element additionally comprises an abrasion resistant coating.

10. A horizontal chamber filtration apparatus, such as a tower press, comprising a filter element according to any of claims 1- 9.

11. Use of a filter element according to any of claims 1- 9 in a horizontal chamber filtration apparatus such as a tower press.

## Patentansprüche

1. Filterelement umfassend miteinander verschränkte Schussgarne (1) und Kettgarne (2) sowie Einlegegarne (3), wobei:
das Filterelement zwei Schichten von Schussgarnen (1) und Kettgarnen (2) umfasst, die miteinander zur Bildung eines Gewebes verschränkt sind, wobei die Einlegegarne (3) zwischen den Schichten von Schussgarnen (1) angeordnet sind;
wobei die Einlegegarne (3) nicht mit den Schussgarnen (1) verschränkt sind und im Wesentlichen parallel zu den Kettgarnen (2) verlaufen;
wobei die Schussgarne (1) im Wesentlichen senkrecht zu den Kettgarnen (2) verlaufen, und wobei
das Verhältnis von Einlegegarnen (3) zu Kettgarnen (2) zumindest 1 : 4 beträgt, und die Schussgarne (1) ein abriebfestes Material umfassen.

2. Filterelement nach Anspruch 1, wobei das abriebfeste Material Polyamid umfasst.

3. Filterelement nach Anspruch 1 oder Anspruch 2, wobei die Schussgarne (1) sowohl an der oberen als auch an der unteren Oberfläche des Filterelements das vorherrschende Garn bilden.

4. Filterelement nach einem der vorhergehenden Ansprüche, wobei die Schussgarne (1) in einer doppelseitigen Atlaskonstruktion verwebt sind.

5. Filterelement nach einem der vorhergehenden Ansprüche, wobei das Verhältnis von Einlegegarnen (3) zu Kettgarnen (2) ungefähr 1 : 1 beträgt.

6. Filterelement nach einem der vorhergehenden Ansprüche, wobei die Einlege-, Kett- und/oder Schussgarne beliebige der Folgenden entweder allein oder in Kombination umfassen: PP, PET, PE, PBT, PPS und/oder Aramid-Materialien.

7. Filterelement nach einem der vorhergehenden Ansprüche, wobei die Schussgarne (1) im Wesentlichen aus Polyamid bestehen.

8. Filterelement nach einem der vorhergehenden Ansprüche, wobei das Filterelement ein Filterband ist.

9. Filterelement nach einem der vorhergehenden Ansprüche, wobei das Filterelement zusätzlich eine abriebfeste Beschichtung umfasst.

10. Horizontale Kammerfiltrationsvorrichtung, wie etwa eine Turmpresse, umfassend ein Filterelement nach einem der Ansprüche 1 bis 9.

11. Verwendung eines Filterelements nach einem der Ansprüche 1 bis 9 in einer horizontalen Kammerfiltrationsvorrichtung, wie etwa einer Turmpresse.

## Revendications

1. Élément filtrant comprenant des fils de trame (1) et des fils de chaîne (2) entrelacés et des fils insérés (3),
dans lequel :
l'élément filtrant comprend deux couches de fils de trame (1) et de fils de chaîne (2) entrelacées pour créer un tissu, avec les fils insérés (3) situés entre lesdites couches de fils de trame (1) ;
les fils insérés (3) ne s'entrelacent pas avec les fils de trame (1) et s'étalent de manière sensiblement parallèle aux fils de chaîne (2) ;
les fils de trame (1) s'étalent de manière sensiblement perpendiculaire aux fils de chaîne (2), et dans lequel :
le rapport des fils insérés (3) sur les fils de chaîne (2) est d'au moins 1:4 et les fils de trame (1) comprennent un matériau résistant à l'abrasion.

2. Élément filtrant selon la revendication 1, dans lequel le matériau résistant à l'abrasion comprend du polyamide.

3. Élément filtrant selon la revendication 1 ou la revendication 2, dans lequel les fils de trame (1) sont le fil prédominant sur les deux surfaces supérieure et inférieure de l'élément filtrant.

4. Élément filtrant selon l'une quelconque des revendications précédentes, dans lequel les fils de trame (1) sont tissés dans une construction de satin double-face.

5. Élément filtrant selon l'une quelconque des revendications précédentes, dans lequel le rapport des fils insérés (3) sur les fils de chaîne (2) est d'approximativement 1:1.

6. Élément filtrant selon l'une quelconque des revendications précédentes, dans lequel les fils insérés, de chaîne et/ou de trame comprennent n'importe lesquels des matériaux suivants, seuls ou en combinaison : -PP, PET, PE, PBT, PPS et/ou matériaux d'aramide.

7. Élément filtrant selon l'une quelconque des revendications précédentes, dans lequel les fils de trame (1) sont essentiellement constitués de polyamide.

8. Élément filtrant selon l'une quelconque des revendications précédentes, dans lequel l'élément filtrant est une bande filtrante.

9. Élément filtrant selon l'une quelconque des revendications précédentes, dans lequel l'élément filtrant comprend en outre un revêtement résistant à l'abrasion.

10. Appareil de filtrage à chambre horizontale, tel qu'une presse à tour, comprenant un élément filtrant selon l'une quelconque des revendications 1-9.

11. Utilisation d'un élément filtrant selon l'une quelconque des revendications 1-9, dans un appareil de filtrage à chambre horizontale tel qu'une presse à tour.
